# EUROPÄISCHE PATENTANMELDUNG

(11) **EP 1 426 018 A1**
(43) Veröffentlichungstag der Anmeldung: **09.06.2004**
(21) Anmeldenummer: 04003458.9
(22) Anmeldetag: 30.03.2000
(51) Int. Cl.: A61C 13/087, A61C 13/00

(54) **Verfahren zur Herstellung von Zahnersatz**

(62) Teilanmeldung aus: 00106849.3
(71) Anmelder: Purner, Helmut, 5020 Salzburg (AT)
(72) Erfinder: Purner, Helmut, 5020 Salzburg (AT)
(74) Vertreter: Berngruber, Otto, Dr.

(57) **Zusammenfassung**

Zahnersatz wird durch Pressen einer erwärmten Pressmasse (24) aus einem aromatischen Thermoplast zwischen einer Form (1) und einem Gegenstempel (2) hergestellt. Dabei werden folgende Schritte durchgeführt: auf ein aus einem Abdruck hergestelltes Modell (20) in der Form (23) wird die Pressmasse (24) in Form einer Platte gelegt, die Pressmasse (24) wird erwärmt, und eine plastische Masse (26) in dem Gegenstempel (2) wird gegen die erwärmte Pressmasse (24) auf dem Modell (20) gedrückt.

## Beschreibung

Die Erfindung bezieht sich auf ein Verfahren zur Herstellung von Zahnersatz, der zumindest teilweise aus einem aromatischen Thermoplast besteht, nach dem Oberbegriff des Anspruchs 1.

Ein solcher Zahnersatz ist bereits bekannt. So geht aus DE 44 20 044 A1 ein Zahnersatz hervor, der zur Befestigung an den natürlichen Zähnen drahtförmige Befestigungselemente aufweist, die aus einem aromatischen Thermoplast bestehen.

Nach EP 0 917 860 A2 werden Teile des Zahnersatzes, wie Prothesesättel bei abnehmbarem Zahnersatz, oder bei festsitzendem Zahnersatz kappenförmige Teile, die auf die Restzähne geklebt oder zementiert werden, durch Spritzguß aus einem aromatischen Thermoplast hergestellt.

Mit diesem bekannten Zahnersatz werden zwar gegenüber dem bekannten Zahnersatz aus Metall wesentliche Vorteile erzielt, insbesondere Vermeidung von Allergien, keine das Aussehen beeinträchtigenden Reflexionen im sichtbaren Mundbereich und keine durch die hohe Wärmeleitfähigkeit von Metall bedingten unangenehmen Temperaturunterschiede im Mund. Bei dem bekannten Zahnersatz sind jedoch nur bestimmte Teile aus aromatischem Thermoplast hergestellt, nach der DE 44 20 044 A1 eben die drahtförmigen Befestigungselemente, und, da die Festigkeit spritzgegossener Teile mitunter zu wünschen übrig läßt, auch nach EP 0 917 860 A2 eher nur weniger belastete Teile.

Zudem weist das Verfahren nach EP 0 917 860 A2 den Nachteil auf, dass die poröse Masse in der das aus Wachs modellierte Zahnersatzteil angeordnet werden muss, beim Spritzgießen Sprünge bekommen kann.

Nach EP-A-0 872 218 wird auf ein aus einem Abdruck hergestellten Modell ein polymeres, faserverstärktes Material gelegt, das durch Bestrahlung aushärtet. Mit einer Membran, auf die ein Druck oder Vakuum einwirkt, wird das polymere Material vor dem Aushärten gegen das Modell gedrückt. Die Festigkeit des so hergestellten duroplastischen Zahnersatzes lässt jedoch zu wünschen übrig.

Aufgabe der Erfindung ist es, ein einfaches Verfahren zur Herstellung eines Zahnersatzes hoher Festigkeit aus Kunststoff zur Verfügung zu stellen.

Dies wird erfindungsgemäß mit einem Verfahren erreicht, bei dem folgende Schritte durchgeführt werden:
- auf ein aus einem Abdruck hergestelltes Modell in der Form wird die Pressmasse in Form einer Platte gelegt,
- die Pressmasse wird erwärmt, und
- eine plastische Masse in dem Gegenstempel wird gegen die erwärmte Pressmasse auf dem Modell gedrückt.

Selbstverständlich brauchen diese Schritte nicht nacheinander durchgeführt zu werden. So kann z.B. zuerst die Pressmasse erwärmt und dann die erwärmte Pressmasse auf das aus einem Abdruck hergestellte Modell in der Form gelegt werden.

Nach der Erfindung wird der Zahnersatz durch Pressen einer erwärmten Pressmasse aus einem aromatischen Thermoplast zwischen einer Form und einem Gegenstempel gebildet. Dadurch tritt überraschenderweise das eher spröde Verhalten spritzgegossener Zahnersatzteile aus aromatischem Thermoplast nicht auf. Möglicherweise hängt dies damit zusammen, daß die Angüsse an den spritzgegossenen Teilen zur Bildung von Schwachstellen führen.

Ein wesentlicher Vorteil der Erfindung besteht auch darin, dass die Herstellung von Zahnersatz ohne Anfertigung eines Wachsmodells erfolgen kann.

Als aromatischer Thermoplast kann erfindungsgemäß beispielsweise Polyetheretherketon PEEK eingesetzt werden. Auch können sulfonsäuregruppenhaltige aromatische Thermoplasten eingesetzt werden, insbesondere Polyethersulfon (PES) oder Polysulfon (PSU) der allgemeinen Formel **(**R¹ - O - R² - SO₂**)**ₙ, worin R¹ und R² aromatische Reste sind.

Der aromatische Thermoplast kann zur Erhöhung der Festigkeit, insbesondere Druckfestigkeit, Füllstoffe enthalten. Auch kann durch den Füllstoff die Farbe der natürlichen Zähne zumindest angenähert werden.

Da durch den Füllstoff im allgemeinen die Elastizität herabgesetzt wird, werden Teile, die eher elastisch sein sollen, wie die Gaumenplatte, aus ungefülltem oder nur wenig Füllstoff enthaltendem aromatischen Thermoplast hergestellt.

Als Füllstoffe können Titandioxid, Kaolin, Talk, Kreide, gemahlene Glasfasern oder Mikroglaskügelchen eingesetzt werden. Der Gehalt der Füllstoffe beträgt dabei vorzugsweise nicht mehr als 60 Vol.-%, insbesondere höchstens 40 Vol.-%. Die gemahlenen Glasfasern können eine Länge von 0,3 bis 1,5 mm besitzen. Vorzugsweise sind sie jedoch weniger als 1 mm lang. Die Korngröße der übrigen, nicht faserförmigen Füllstoffe beträgt hingegen höchstens 100 µm. So werden die Mikroglaskügelchen vorzugsweise mit einer Teilchengröße von 5 bis 80 µm eingesetzt, Kaolin beispielsweise mit einer Teilchengröße von 0,3 bis 3 µm. Die obere Grenze des Füllstoffgehalts liegt dort, wo das Fließverhalten der Pressmasse so beeinträchtigt wird, dass sie nicht mehr verarbeitet werden kann. Um eine weiße Farbe zu erhalten, kann insbesondere Titandioxid als Füllstoff eingesetzt werden.

Nach dem erfindungsgemäßen Verfahren kann sowohl abnehmbarer Zahnersatz wie festsitzender Zahnersatz oder kombinierter abnehmbarer und festsitzender Zahnersatz hergestellt werden. Dabei kann der gesamte Zahnersatz nach dem erfindungsgemäßen Verfahren aus einem aromatischen Thermoplast, also eine Vollprothese hergestellt werden, oder nur Teile davon, insbesondere alle Teile, die bisher aus Metall hergestellt werden.

So kann bei abnehmbarem Zahnersatz erfindungsgemäß beispielsweise der Prothesesattel oder Prothesenbasis aus aromatischem Thermoplast hergestellt sein, der mit Retentionen zur Befestigung der Prothesezähne versehen ist.

Wenn der abnehmbare Zahnersatz mehrere Prothesesättel aufweist, können diese einstückig durch einen Bügel und/oder eine Gaumenplatte miteinander verbunden sein. Die Prothesesättel und der Bügel bzw. die Gaumenplatte können also aus einem einzigen Pressteil aus dem aromatischen Thermoplast bestehen.

Der festsitzende Zahnersatz kann beispielsweise eine Krone oder Brücke sein, die erfindungsgemäß ganz aus dem aromatischen Thermoplast bestehen können, zumindest jedoch deren Gerüst. Desgleichen kann ein Inlay erfindungsgemäß aus einem aromatischen Thermoplast hergestellt werden, zumindest jedoch dessen noch zu verblendende Unterlage.

Der Begriff Zahnersatz ist erfindungsgemäß weit auszulegen. So erfasst er z.B. auch in den Kieferknochen eingesetzte Implantate, an denen weiterer Zahnersatz befestigt wird.

Nach dem erfindungsgemäßen Verfahren wird das aus einem Abdruck hergestellte Modell oder ein Teil davon in einer Form angeordnet. Die Form kann dazu mit Sand gefüllt sein, der den unteren Teil des Modells aufnimmt. Als Pressmasse aus aromatischem Thermoplast wird eine Platte verwendet, die auf das Modell vorzugsweise in der unteren Form gelegt wird. Die Platte wird anschließend erwärmt, vorzugsweise auf 300 bis 500°C, insbesondere 350 bis 400°C. Es kann jedoch auch die bereits erwärmte Platte zwischen Stempel und Gegenstempel eingebracht werden. Der Gegenstempel oder die obere Form wird vorzugsweise mit einer plastischen Masse gefüllt. Mit der plastischen Masse wird der Gegenstempel dann gegen die erwärmte Platte aus aromatischem Thermoplast auf dem Modell gedrückt. Der Pressdruck beträgt vorzugsweise 5 bis 400 bar, insbesondere 25 bis 250 bar.

Ferner hat es sich als vorteilhaft erwiesen, daß Pressen unter leichtem Vakuum durchzuführen, um Lufteinschlüsse im Zahnersatz zu verhindern.

Der aromatische Thermoplast kann aus ästhetischen Gründen auch eingefärbt werden, beispielsweise mit einem rosa Farbstoff. Desgleichen ist es möglich, eine entsprechend eingefärbte Kunststoffbeschichtung vorzusehen, beispielsweise rosa im Gaumenbereich der Prothese und weiß im Ersatzzahnbereich.

Nachstehend ist die Erfindung anhand der Zeichnung näher erläutert. Darin zeigen:

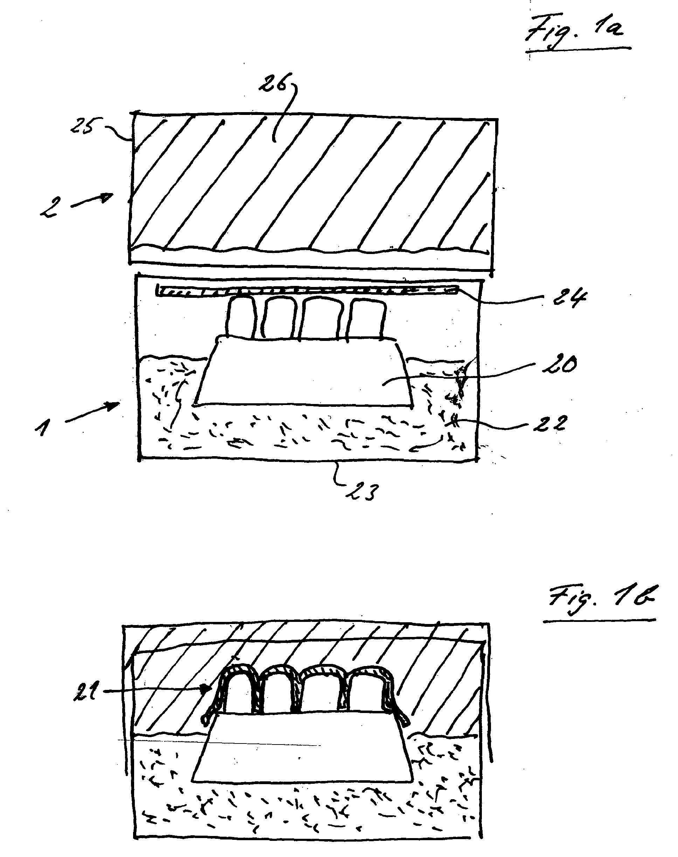

- Fig. 1a und 1b: jeweils einen Schnitt durch eine Form und einen Gegenstempel zur Herstellung einer Teilprothese vor und nach dem Pressen der Pressmasse.

Nach Fig. 1a und 1b wird aus einem Abdruck ein Modell 20 hergestellt, das dem herzustellenden Zahnersatz 21, in diesem Fall ein Gerüst, entspricht.

Das Modell 20 wird auf dem Boden oder in einem feuerfesten Schüttgut 22, wie z.B. Sand, in dem Hohlkörper 23 angeordnet, um die Form 1 zu bilden. Auf dem Modell 20 wird eine plattenförmige Pressmasse 24 aus aromatischem Thermoplast angeordnet, welche eine Dicke von beispielsweise 1 bis 3 mm aufweist.

Der Hohlkörper 25 wird mit einer plastischen Masse 26 gefüllt, um den Gegenstempel 2 zu bilden. Der Gegenstempel 2 und die Form 1 sind ineinanderschiebbar ausgebildet. Die plattenförmige Pressmasse 24 wird z.B. durch Erwärmung auf 400°C plastifiziert. Auf die plastifizierte Pressmasse 26 auf dem Modell 20 wird die plastische Masse 26 in dem Gegenstempel 1 gepresst, wie in Fig. 1b dargestellt, mit einem Druck von beispielsweise 100 bar. Nach dem Abkühlen wird entformt und der gebildete Zahnersatz 21, in diesem Fall ein Gerüst, nachbearbeitet.

## Patentansprüche

1. Verfahren zur Herstellung von Zahnersatz, der durch Pressen einer erwärmten Pressmasse (24) aus einem aromatischen Thermoplast zwischen einer Form (1) und einem Gegenstempel (2) gebildet wird, **dadurch gekennzeichnet, daß** folgende Schritte durchgeführt werden:
- auf ein aus einem Abdruck hergestelltes Modell (20) in der Form (23) wird die Pressmasse (24) in Form einer Platte gelegt,
- die Pressmasse (24) wird erwärmt, und
- eine plastische Masse (26) in dem Gegenstempel (2) wird gegen die erwärmte Pressmasse (24) auf dem Modell (20) gedrückt.

2. Verfahren nach Anspruch 1, **dadurch gekennzeichnet, daß** als aromatischer Thermoplast ein Sulfonsäuregruppen haltiger aromatischer Thermoplast oder Polyetheretherketon (PEEK) verwendet wird.

3. Verfahren nach Anspruch 2, **dadurch gekennzeichnet, daß** der Sulfonsäuregruppen haltige Thermoplast Polyethersulfon (PES) oder Polysulfon (PSU) ist.

4. Verfahren nach einem der vorstehenden Ansprüche, **dadurch gekennzeichnet, daß** der aromatische Thermoplast bis zu 60 Vol.-% Füllstoffe enthält.
